# EUROPÄISCHE PATENTSCHRIFT

(11) **EP 3 724 982 B1**
(45) Veröffentlichungstag und Bekanntmachung des Hinweises auf die Patenterteilung: **05.10.2022**
(21) Anmeldenummer: 18704490.4
(22) Anmeldetag: 02.02.2018
(51) Int. Cl.: H02M 7/483, H02M 1/32

(54) **MODULARER MEHRSTUFENUMRICHTER UND SCHALTMODUL FÜR MODULAREN MEHRSTUFENUMRICHTER**
MODULAR MULTI-STAGE CONVERTER AND SWITCHING MODULE FOR A MODULAR MULTI-STAGE CONVERTER
CONVERTISSEUR REDRESSEUR MODULAIRE À PLUSIEURS ÉTAGES ET MODULE DE COMMUTATION POUR CONVERTISSEUR REDRESSEUR MODULAIRE À PLUSIEURS ÉTAGES

(43) Veröffentlichungstag der Anmeldung: 21.10.2020
(73) Patentinhaber: Siemens Energy Global GmbH & Co. KG, 81739 München (DE)
(72) Erfinder: SCHÖN, Andre, 91058 Erlangen (DE); BAKRAN, Mark-Matthias, 91052 Erlangen (DE); HOFMANN, Viktor, 95448 Bayreuth (DE)
(86) Internationale Anmeldenummer: PCT/EP2018/052647
(87) Internationale Veröffentlichungsnummer: WO 2019/149367

(56) Entgegenhaltungen:
- WO-A1-2017/137088
- WO-A1-2017/137092
- DE-A1-102015 222 280

## Beschreibung

Die Erfindung betrifft ein Schaltmodul für einen modularen Mehrstufenumrichter umfassend einen sich zwischen einem ersten und einem zweiten äußeren Anschluss des Schaltmoduls erstreckenden Brückenzweig mit wenigstens einem ersten, abschaltbaren Halbleiterschalter sowie einen ersten Energiespeicherzweig, der einen ersten Energiespeicher und wenigstens einen zweiten, abschaltbaren Halbleiterschalter umfasst, und der parallel zum ersten Halbleiterschalter geschaltet ist.

Modulare Mehrstufenumrichter (MMC) sind aus dem Stand der Technik, beispielsweise aus der WO 2016/155850 A1 bekannt. Der MMC zeichnet sich insbesondere durch eine modulare Bauweise aus. In Figur 1 ist ein Beispiel eines MMC 1 dargestellt. Der MMC 1 umfasst Umrichterarme 2a-f, die sich jeweils zwischen einem Wechselspannungsanschluss L1-L3 und einem von zwei Gleichspannungspolen L+, L- des MMC 1 erstrecken. Die Umrichterarme 2a-f des MMC 1 weisen jeweils eine Reihenschaltung zweipoliger Schaltmodule SM auf, wobei jedes Schaltmodul SM abschaltbare Halbleiterschalter sowie einen Energiespeicher, bevorzugt in Form eines Schaltmodulkondensators, umfasst. Jedes der Schaltmodule SM ist mittels einer Ansteuereinrichtung einzeln ansteuerbar. Eine an einem der Umrichterarme abfallende Spannung ist gleich der Summe von Spannungen, die an den zugehörigen Schaltmodulen SM abfallen. Mittels des MMC 1 ist eine besonders vorteilhafte stufenförmige (AC-) Konverterspannung erzeugbar. Die Schaltmodule SM sind meist als Halbbrückenschaltungen oder als Vollbrückenschaltungen ausgebildet.

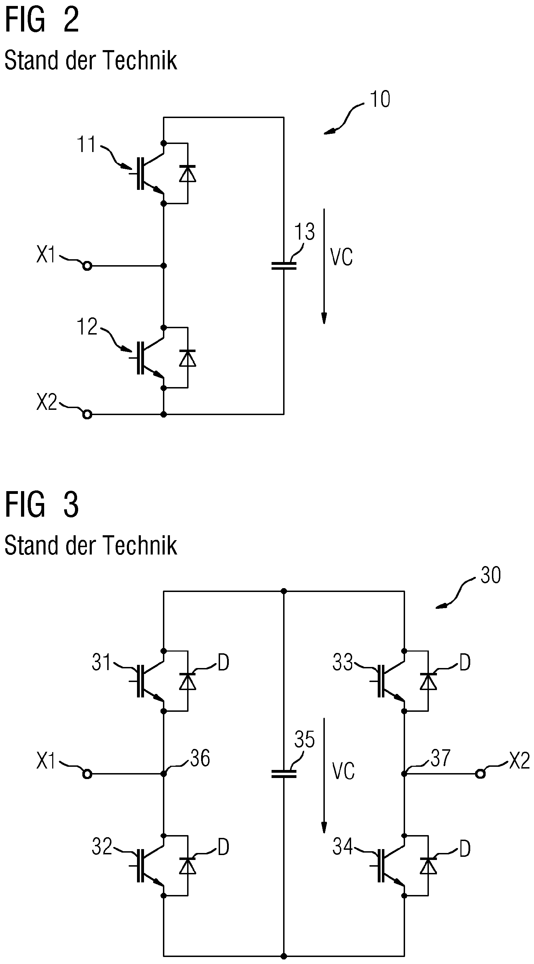

Ein Schaltmodul in Halbbrückenschaltung 10 ist in Figur 2 dargestellt. Die Halbbrückenschaltung 10 weist zwei abschaltbare Halbleiterschalter 11, 12 (im dargestellten Fall sind es IGBT-Schalter, wobei im Allgemeinen auch andere abschaltbare Halbleiterschalter, wie IGCT oder dergleichen verwendet werden können) und den Energiespeicher 13 auf, wobei die Halbleiterschalter 11, 12 so mit dem Energiespeicher 13 verschaltet sind, dass an den Ausgangsklemmen X1, X3 des Schaltmoduls eine an dem Energiespeicher 13 abfallende Energiespeicherspannung Vc oder eine Nullspannung erzeugbar ist.

Ein Schaltmodul in Vollbrückenschaltung 30 ist in Figur 3 dargestellt. Die Vollbrückenschaltung 30 weist einen ersten Halbleiterschalter 31 sowie einen zweiten Halbleiterschalter 22 auf, beide in Form von IGBTs. Die Durchlassrichtung der beiden Halbleiterschalter 31 und 32 ist gleichgerichtet. Ferner umfasst die Vollbrückenmodulschaltung 30 einen dritten Halbleiterschalter 33 sowie einen vierten Halbleiterschalter 34, beide ebenfalls in Form von IGBTs. Die IGBTs können durch andere abschaltbare Halbleiterschalter ersetzt werden. Die Durchlassrichtung der beiden Halbleiterschalter 33 und 34 ist gleichgerichtet. Ein Schaltmodulkondensator 35 ist parallel zu den beiden Reihenschaltungen der Halbleiterschalter angeordnet. Der erste Anschluss X1 ist an einem Potenzialpunkt 36 zwischen den Halbleiterschaltern 31, 32 angeordnet, der zweite Anschluss X2 ist an einem Potenzialpunkt 37 zwischen den Halbleiterschaltern 33, 34 angeordnet. Jedem der Halbleiterschalter 31-34 ist je eine Freilaufdiode D antiparallel geschaltet. Durch eine geeignete Steuerung der Leistungshalbleiter 31-34 kann die an den Anschlüssen X1, X2 abfallende Spannung erzeugt werden, die der am Schaltmodulkondensator 35 abfallenden Spannung Vc, der am Schaltmodulkondensator 35 abfallenden Spannung jedoch mit entgegengesetzter Polarität (-Vc) oder der Nullspannung entspricht.

Weitere Arten von Schaltmodulen sind beispielsweise das sogenannte Double-Clamp Submodule, das in dem Beitrag "Modular Multilevel Converter: A Universal Concept for HVDC-Networks and Extended DC-Bus-Applications" von R. Marquardt beschrieben ist, das sogenannte Five-Level Cross Connected Submodule, bekannt aus dem Beitrag "Five Level Cross Connected Cell for Cascaded Converters" von A. Nami et al. und das Double-Submodule Circuit, das in dem Beitrag "A Submodule Implementation for Parallel Connection of Capacitors in Modular Multilevel Converters" von K. Ilves et al. offenbart ist.

Schaltmodule in Parallelschaltung sind zudem aus der WO 2017/137088 A1, der DE 10 2015 222 280 A1 und der WO 2017/137092 A1 bekannt. Umrichter mit Schaltmodulen der genannten Art werden üblicherweise zur Stromumwandlung, beispielsweise in der Hochspannungsgleichstromübertragung, als auch zur Blindleistungskompensation bzw. Stabilisierung von Wechselspannungsnetzen eingesetzt. Im letzteren Fall ist der Umrichterarm beispielsweise zwischen zwei Wechselspannungsanschlüssen des Umrichters angeordnet. Für alle bekannten Schaltmodulvarianten gilt, dass es bei einem Fehler im Schaltmodul zu einer explosionsartigen Entladung des Energiespeichers im Schaltmodul kommen kann. Eine solche Entladung kann zu einer Beschädigung oder gar Zerstörung des Schaltmoduls und zu einer Funktionsstörung des gesamten Umrichters führen.

Die Aufgabe der Erfindung ist es, ein Schaltmodul der eingangs genannten Art bereitzustellen, das möglichst wenig fehleranfällig ist.

Die Aufgabe wird bei einem artgemäßen Umrichter erfindungsgemäß dadurch gelöst, dass ein Schaltmodul nach Anspruch 1 verwendet wird.

Gemäß einer Ausgestaltung, welche zum Verständnis der Erfindung dient, umfasst der Brückenzweig den ersten und einen vierten, abschaltbaren Halbleiterschalter. Der vierte Halbleiterschalter ist zwischen dem ersten Halbleiterschalter und dem zweiten äußeren Anschluss des Schaltmoduls angeordnet. Das Schaltmodul umfasst zudem ferner einen ersten Schaltzweig, der sich zwischen einem ersten Potenzialpunkt zwischen dem vierten Halbleiterschalter und dem zweiten Anschluss und einem zweiten Potenzialpunkt zwischen dem ersten Energiespeicher und dem zweiten Halbleiterschalter erstreckt, wobei im ersten Schaltzweig ein fünfter Halbleiterschalter angeordnet ist, und einen zweiten Schaltzweig, der sich zwischen dem ersten Potenzialpunkt zwischen dem vierten Halbleiterschalter und dem zweiten Anschluss und einem dritten Potenzialpunkt zwischen dem zweiten Energiespeicher und dem dritten Halbleiterschalter erstreckt, wobei im zweiten Schaltzweig ein sechster Halbleiterschalter angeordnet ist. In dieser Ausführungsform entspricht das Schaltmodul bezüglich dessen möglicher Zustände in etwa einer Vollbrückenschaltung.

Gemäß einer Ausgestaltung, welche zum Verständnis der Erfindung dient, sind der fünfte Halbleiterschalter und der sechste Halbleiterschalter nicht ansteuerbare Halbleiterschalter. Ein solcher Halbleiterschalter kann beispielsweise eine Diode sein. Mit dieser Variante ist ein vereinfachter und kostengünstiger Aufbau des Schaltmoduls bereitgestellt. Die Durchlassverluste sind bei dieser Variante vorteilhafterweise relativ niedrig.

Gemäß einer alternativen Ausgestaltung, welche zum Verständnis der Erfindung dient, sind der fünfte und der sechste Halbleiterschalter der Schaltzweige jeweils abschaltbare Halbleiterschalter, wobei die Halbleiterschalter und die Energiespeicher derart miteinander verschaltet sind, dass an den Anschlüssen des Schaltmoduls zusätzlich eine negative Energiespeicherspannung erzeugbar ist. Hierbei kann vorteilhaft ein zusätzlicher Spannungszustand am Schaltmodul erzeugt werden. Auf diese Weise kann das Schaltmodul beispielsweise aktiv eine Gegenspannung in einem Kurzschlussfall am Umrichter aufbauen.

Erfindungsgemäß weisen die Energiespeicherzweige jeweils einen siebten bzw. einen achten Halbleiterschalter in einer Reihenschaltung zum Energiespeicher auf. Mittels der zusätzlichen Halbleiterschalter in Reihe zu den Energiespeichern kann an den Anschlüssen des Schaltmoduls eine Nullspannung erzeugt werden, indem der siebte und der achte Halbleiterschalter gesperrt werden. Bei geeigneter Ansteuerung der übrigen Halbleiterschalter kann damit der Strom durch das Schaltmodul auf drei Strompfade verteilt werden: den Brückenzweig und je einen Strompfad über die Energiespeicherzweige bis zum ersten bzw. zweiten Potenzialpunkt und weiter über die zugehörigen Schaltzweige. Auf diese Weise können die Verluste im Schaltmodul weiter reduziert werden.

Das erfindungsgemäße Schaltmodul erlaubt einen modularen Aufbau. Insbesondere können die Energiespeicherzweige mehrfach in einem Schaltmodul eingesetzt werden. Eine Parallelschaltung der Energiespeicherzweige ergibt die Möglichkeit zur Erzeugung weiterer Spannungszustände. Zudem kann eine weiter verbesserte Reduzierung der Entladeenergie im Fehlerfall erreicht werden.

Gemäß einer Variante umfasst demnach das Schaltmodul einen dritten Energiespeicherzweig und einen vierten Energiespeicherzweig, wobei der erste und der dritte Energiespeicherzweig gleichartig aufgebaut sind, und der zweite und der vierte Energiespeicherzweig gleichartig aufgebaut sind, wobei der dritte Energiespeicherzweig parallel zum ersten Energiespeicherzweig und der vierte Energiespeicherzweig parallel zum zweiten Energiespeicherzweig unter Ausbildung des Schaltmoduls geschaltet sind.

Gemäß einer davon abweichenden Variante bilden der erste Energiespeicherzweig und der erste Schaltzweig eine erste Energiespeicherschaltung und der zweite Energiespeicherzweig und der zweite Schaltzweig eine zweite Energiespeicherschaltung. Die Energiespeicherschaltungen können vereinfacht als modulare Blöcke aufgefasst werden. Eine Vielzahl solcher Blöcke kann in einem Schaltmodul parallel geschaltet werden. Zum Beispiel umfasst das Schaltmodul zusätzlich eine dritte und eine vierte Energiespeicherschaltung, wobei die dritte Energiespeicherschaltung und die erste Energiespeicherschaltung gleichartig aufgebaut sind, und wobei die vierte und die zweite Energiespeicherschaltung gleichartig aufgebaut sind, und die dritte Energiespeicherschaltung parallel zur ersten Energiespeicherschaltung und die vierte Energiespeicherschaltung parallel zur zweiten Energiespeicherschaltung unter Ausbildung des Schaltmoduls geschaltet sind.

Eine entsprechende Erweiterung mit mehr als zwei parallelen Energiespeicherzweigen bzw. Energiespeicherschaltungen ist im Rahmen der Erfindung aufgrund des modularen Aufbaus möglich.

Vorzugsweise ist mindestens einem der abschaltbaren Halbleiterschalter, geeigneterweise allen Halbleiterschaltern jeweils, eine Freilaufdiode antiparallel geschaltet. Somit ist bei Stomrichtungsumkehrung auf einfache Weise ein Freilaufpfad über die Halbleiterschalter bereitgestellt. Alternativ oder in Kombination können auch rückwärts leitfähige Halbleiterschalter verwendet werden, zum Beispiel die aus dem Stand der Technik bekannten RC-IGBTs.

Gemäß einer Ausgestaltung, welche zum Verständnis der Erfindung dient, weisen die Halbleiterschalter der Energiespeicherzweige und/oder der Schaltzweige höchstens 70 %, bevorzugt höchstens 60 % der Stromtragfähigkeit des Halbleiterschalters des Brückenzweiges auf. Auf diese Weise können die Kosten des Schaltmoduls vorteilhaft reduziert werden. Die Erfindung betrifft ferner einen modularen Mehrstufenumrichter.

Wie bereits oben beschrieben ist ein modularer Mehrstufenumrichter beispielsweise aus der Druckschrift WO 2016/155850 A1 bekannt.

Die Aufgabe der Erfindung ist es hierbei, einen modularen Mehrstufenumrichter vorzuschlagen, der möglichst zuverlässig ist.

Die Aufgabe wird erfindungsgemäß dadurch gelöst, dass der modulare Mehrstufenumrichter wenigstens ein erfindungsgemäßes Schaltmodul umfasst.

Die Vorteile des erfindungsgemäßen modularen Mehrstufenumrichters ergeben sich aus den zuvor beschriebenen Vorteilen des erfindungsgemäßen Schaltmoduls. Wie zuvor erläutert, können insbesondere die negativen Konsequenzen einer Energieentladung im Schaltmodul reduziert werden. Dadurch kann die Zuverlässigkeit des Mehrstufenumrichters vorteilhaft erhöht werden.

Die Erfindung wird anhand von Beispielen in den Figuren 4 bis 9 weiter erläutert.

Figur 4 zeigt ein erstes Beispiel zum Verständnis des erfinderischen Schaltmoduls in einer schematischen Darstellung;

Figur 5 zeigt ein zweites Beispiel zum Verständnis des erfinderischen Schaltmoduls in einer schematischen Darstellung;

Figur 6 zeigt ein drittes Beispiel zum Verständnis des erfinderischen Schaltmoduls in einer schematischen Darstellung;

Figur 7 zeigt ein erstes Ausführungsbeispiel eines erfindungsgemäßen Schaltmoduls in einer schematischen Darstellung;

Figur 8 zeigt ein viertes Beispiel zum Verständnis des erfinderischen Schaltmoduls in einer schematischen Darstellung;

Figur 9 zeigt ein fünftes Beispiel zum Verständnis des erfinderischen Schaltmoduls in einer schematischen Darstellung.

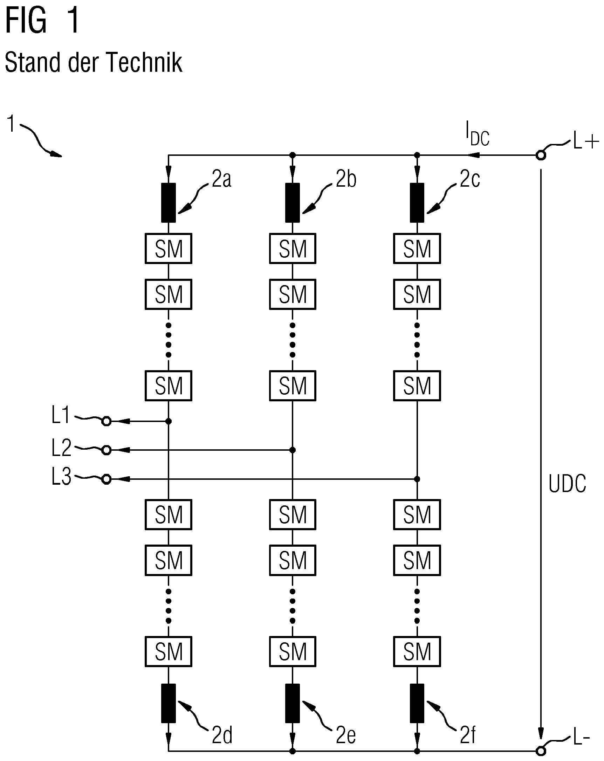

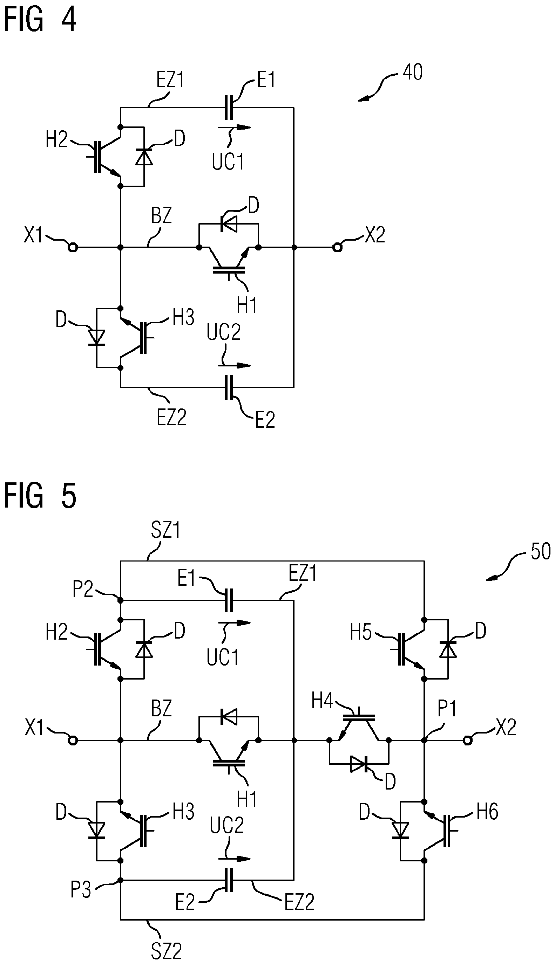

In den Figuren 4-9 sind jeweils Schaltmodule gezeigt, die beispielsweise in dem modularen Mehrstufenumrichter der Figur 1 eingesetzt werden können.

In Figur 4 ist ein Schaltmodul 40 dargestellt. Das Schaltmodul 40 ist zweipolig, umfasst demnach zwei äußere Anschlüsse bzw. Anschlussklemmen X1 und X2. Zwischen den Anschlüssen X1, X2 erstreckt sich ein Brückenzweig BZ, in dem ein erster, abschaltbarer Halbleiterschalter H1 angeordnet ist. Das Schaltmodul 40 umfasst ferner einen ersten Energiespeicherzweig EZ1, in dem ein zweiter, abschaltbarer Halbleiterschalter H2 sowie, in einer Reihenschaltung dazu, ein erster Energiespeicher E1 angeordnet sind. Der erste Energiespeicherzweig EZ1 ist in einer Parallelschaltung zum ersten Halbleiterschalter H1 angeordnet. Zudem umfasst das Schaltmodul 40 einen zweiten Energiespeicherzweig EZ2, in dem ein dritter, abschaltbarer Halbleiterschalter H3 sowie, in einer Reihenschaltung dazu, ein zweiter Energiespeicher E2 angeordnet sind. Der zweite Energiespeicherzweig EZ2 ist ebenfalls in einer Parallelschaltung zum ersten Halbleiterschalter H1 angeordnet. Zu jedem der Halbleiterschalter H1-3 des Schaltmoduls 40 ist eine Freilaufdiode D antiparallel geschaltet. Die beiden Halbleiterschalter H2 und H3 der Energiespeicherzweige weisen entgegengesetzte Durchlassrichtungen auf. Aufgrund der Parallelschaltung der Energiespeicherzweige EZ1 und EZ2 ist die an dem ersten Energiespeicher E1 abfallende Energiespeicherspannung UC1 stets gleich der an dem zweiten Energiespeicher E2 abfallenden Energiespeicherspannung UC2. In der folgenden Tabelle sind zwei Spannungszustände aufgelistet, die mittels einer geeigneten Ansteuerung der Halbleiterschalter H1-3 an den äußeren Anschlüssen X1, X2 des Schaltmoduls 40 erzeugbar sind:

| H1 | H2 | H3 | Schaltmodulspannung |
|---|---|---|---|
| 0 | 1 | 1 | UC1 bzw. UC2 |
| 1 | 0 | 0 | 0 |

Eine 1 bedeutet einen leitenden Zustand, eine 0 einen sperrenden Zustand des entsprechenden Halbleiterschalters. Die erzeugbaren Zustände sind unabhängig von einer Stromrichtung durch das Schaltmodul 40.

Ein weiterer Schaltmodulzustand kann durch Sperren aller Halbleiterschalter H1-3 des Schaltmoduls 40 erzeugt werden. In diesem Fall ergibt sich bei einem Stromfluss von der Klemme X1 zur Klemme X2 eine Parallelschaltung beider Energiespeicher E1 bzw. E2. Bei einem negativen Stromfluss, i.e. von der Klemme X2 zur Klemme X1 ergibt sich ein Freilauf über die Freilaufdiode des ersten Halbleiterschalters H1.

In Figur 5 ist ein weiteres Schaltmodul 50 dargestellt. In den Figuren 4 und 5 sind gleiche und gleichartige Bauteile und Elemente mit gleichen Bezugszeichen versehen. Aus Gründen der Übersichtlichkeit wird im Einzelnen nur auf die Unterschiede zwischen dem Schaltmodul 50 und dem Schaltmodul 40 der Figur 4 näher eingegangen. Die Ausführung des Schaltmoduls 50 entspricht funktional in mancher Hinsicht einer Vollbrückenschaltung wie in Figur 3.

Im Brückenzweig BZ des Schaltmoduls 50 ist ein vierter, abschaltbarer Halbleiterschalter H4 angeordnet, dessen Durchlassrichtung entgegengesetzt zur Durchlassrichtung des ersten Halbleiterschalters H1 gerichtet ist. Das Schaltmodul 50 umfasst ferner einen ersten Schaltzweig SZ1. Der erste Schaltzweig SZ1 erstreckt sich zwischen einem ersten Potenzialpunkt P1 und einem zweiten Potenzialpunkt P2. Der erste Potenzialpunkt P1 ist zwischen dem vierten Halbleiterschalter H4 des Brückenzweiges BZ und dem zweiten äußeren Anschluss X2 angeordnet. Er ist also mit anderen Worten direkt mit dem Anschluss X2 verbunden. Der zweite Potenzialpunkt P2 ist zwischen dem zweiten Halbleiterschalter H2 und dem ersten Energiespeicher E1 angeordnet. Das Schaltmodul 50 umfasst des Weiteren einen zweiten Schaltzweig SZ2 zwischen dem ersten Potenzialpunkt P1 und einem dritten Potenzialpunkt P3, wobei der dritte Potenzialpunkt P3 zwischen dem zweiten Energiespeicher E2 und dem dritten Halbleiterschalter H3 angeordnet ist. In der folgenden Tabelle sind drei Spannungszustände aufgelistet, die mittels einer geeigneten Ansteuerung der Halbleiterschalter H1-6 an den äußeren Anschlüssen X1, X2 des Schaltmoduls 50 erzeugbar sind:

| H1 | H2 | H3 | H4 | H5 | H6 | Schaltmodulspannung |
|---|---|---|---|---|---|---|
| 0 | 1 | 1 | 1 | 0 | 0 | UC1 bzw. UC2 |
| 1 | 0 | 0 | 0 | 1 | 1 | -UC1 bzw. -UC2 |
| 0 | 1 | 1 | 0 | 1 | 1 | 0 |

Eine 1 bedeutet einen leitenden Zustand, eine 0 einen sperrenden Zustand des entsprechenden Halbleiterschalters. Die erzeugbaren Zustände sind unabhängig von einer Stromrichtung durch das Schaltmodul 40. Mit dieser Konfiguration müssen die Halbleiterschalter H2, H3, H5 und H6 lediglich auf etwa die halbe Stromtragfähigkeit dimensioniert bzw. ausgelegt werden.

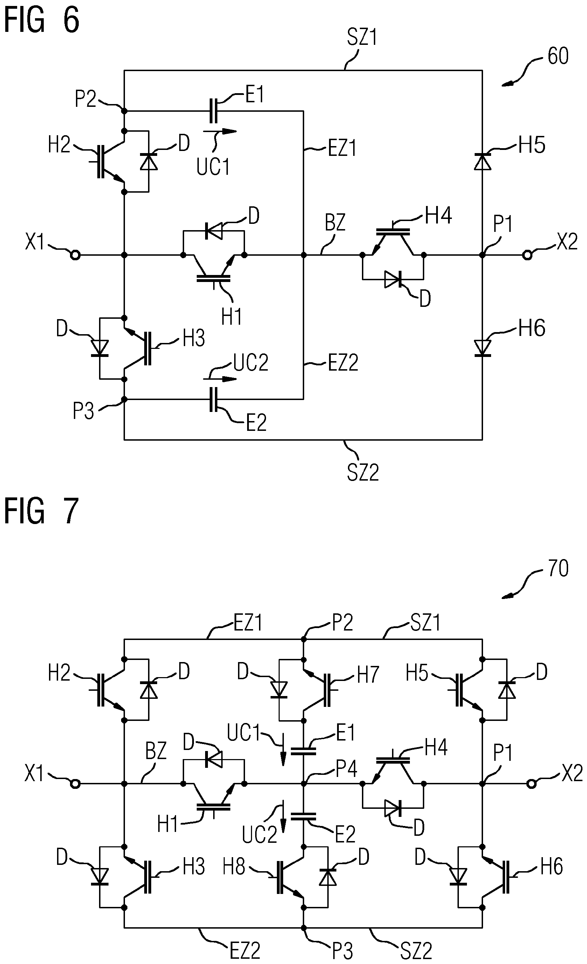

Figur 6 zeigt ein drittes Schaltmodul 60. Der Aufbau des Schaltmoduls 60 entspricht weitgehend demjenigen des Schaltmoduls 50 der Figur 5. In den Figuren 4 bis 6 sind gleiche und gleichartige Bauteile und Elemente mit gleichen Bezugszeichen versehen. Aus Gründen der Übersichtlichkeit wird im Einzelnen nur auf die Unterschiede zwischen dem Schaltmodul 60 und dem Schaltmodul 50 der Figur 5 näher eingegangen. Im Unterschied zum Schaltmodul 50 der Figur 5 sind die Halbleiterschalter H5 und H6 des Schaltmoduls 60 ungeregelte Halbleiterschalter in Form von Dioden. Die Durchlassrichtung der Halbleiterschalter H5,H6 entspricht der Durchlassrichtung der Freilaufdioden, die im Schaltmodul 50 den abschaltbaren Halbleiterschaltern H5,H6 zugeordnet sind. Mit anderen Worten wurde in den Schaltzweigen SZ1, SZ2 des Schaltmoduls 60 auf abschaltbare Halbleiterschalter verzichtet. Das Schaltmodul 60 kann damit im Gegensatz zum Schaltmodul 50 aktiv keine negative Spannung -UC1 bzw. -UC2 an dessen Anschlüssen X1, X2 aufbauen. Zu beachten ist jedoch, dass bei gleichzeitiger Sperrung aller abschaltbarer Halbleiterschalter H1-H4 wird sich jedoch bei negativer Stromrichtung eine negative Spannung -UC1/-UC2 am Schaltmodul bzw. an dessen Anschlüssen einstellen.

In Figur 7 ist ein viertes Schaltmodul 70 dargestellt. Der Aufbau des Schaltmoduls 70 entspricht weitgehend demjenigen des Schaltmoduls 50 der Figur 5. In den Figuren 4 bis 7 sind gleiche und gleichartige Bauteile und Elemente mit gleichen Bezugszeichen versehen. Aus Gründen der Übersichtlichkeit wird im Einzelnen nur auf die Unterschiede zwischen dem Schaltmodul 70 und dem Schaltmodul 50 der Figur 5 näher eingegangen. Im Unterschied zum Schaltmodul 50 der Figur 5 umfasst das Schaltmodul 70 einen siebten, abschaltbaren Halbleiterschalter in Reihe zum ersten Energiespeicher E1 sowie einen achten, abschaltbaren Halbleiterschalter in Reihe zum zweiten Energiespeicher E2. Der siebte Halbleiterschalter H7 ist dabei zwischen dem zweiten Potenzialpunkt P2 und einem vierten Potenzialpunkt P4 zwischen den beiden Halbleiterschaltern H1 und H4 des Brückenzweiges BZ angeordnet. Der achte Halbleiterschalter H8 ist entsprechend zwischen dem dritten Potenzialpunkt P3 und dem vierten Potenzialpunkt P4 angeordnet. Der siebte und achte Halbleiterschalter H7, H8 erlauben eine Sperrung des Strompfades über die beiden Energiespeicher E1 bzw. E2 (genauer, des Pfades zwischen dem zweiten Potenzialpunkt bzw. dem dritten Potenzialpunkt und dem vierten Potenzialpunkt). Durch Sperrung dieser beiden Halbleiterschalter H7, H8 kann stromrichtungsunabhängig die Nullspannung am Schaltmodul erzeugt werden, wobei der Strom durch das Schaltmodul sich auf drei Strompfade verteilt: den Brückenzweig, den Pfad über die Halbleiterschalter H2 und H5 bzw. deren Freilaufdioden, und den Pfad über die Halbleiterschalter H3 und H6 bzw. über deren Freilaufdioden. Hierbei können Verluste im Schaltmodul und Belastung der Halbleiterschalter reduziert werden.

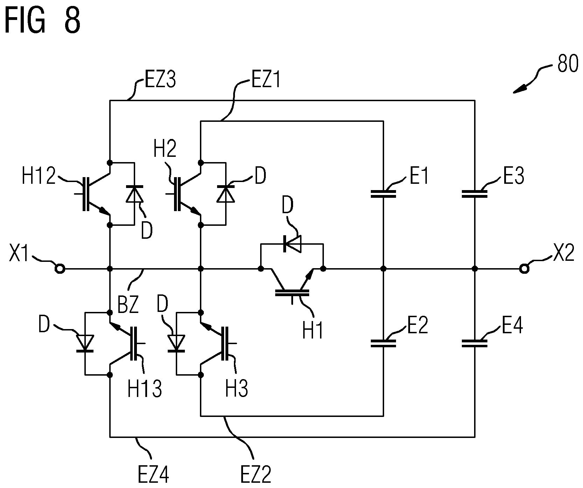

In Figur 8 ist ein fünftes Schaltmodul 80 dargestellt. Das Schaltmodul 80 ähnelt in seinem Aufbau dem Schaltmodul 40 der Figur 4. In den Figuren 4 und 8 sind gleiche und gleichartige Bauteile und Elemente mit gleichen Bezugszeichen versehen. Aus Gründen der Übersichtlichkeit wird im Einzelnen nur auf die Unterschiede zwischen dem Schaltmodul 80 und dem Schaltmodul 40 der Figur 4 näher eingegangen. Das Schaltmodul 80 zeichnet sich durch einen dritten Energiespeicherzweig EZ3 in Parallelschaltung zum ersten Energiespeicherzweig EZ1 und durch einen vierten Energiespeicherzweig EZ4 in Parallelschaltung zum zweiten Energiespeicherzweig EZ2 aus. Der dritte Energiespeicherzweig EZ3 ist gleichartig zum ersten Energiespeicherzweig EZ1 aufgebaut und umfasst einen zusätzlichen Halbleiterschalter H12 und einen zusätzlichen Energiespeicher E3. Entsprechend ist der vierte Energiespeicherzweig EZ4 gleichartig zum zweiten Energiespeicherzweig EZ2 aufgebaut und umfasst dementsprechend einen zusätzlichen Halbleiterschalter H13 und einen zusätzlichen Energiespeicher E4. Es ist bereits aus der Figur 8 erkennbar, dass eine Parallelschaltung einer beliebigen Anzahl der Energiespeicherzweige prinzipiell möglich ist.

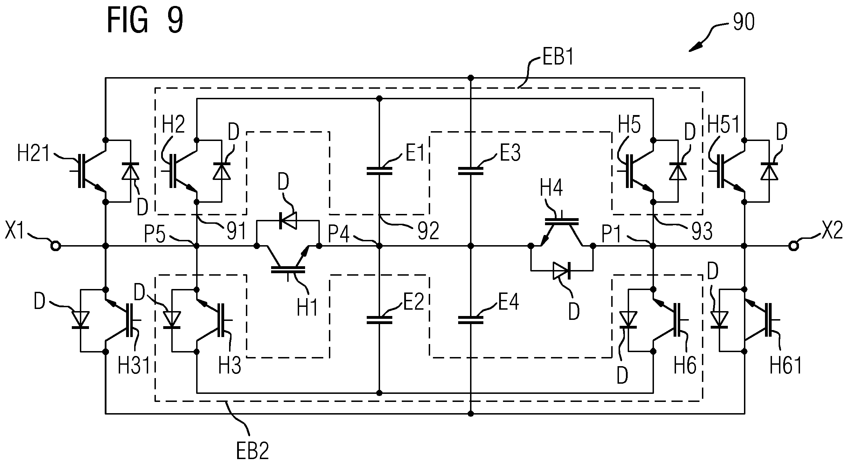

In Figur 9 ist ein sechstes Schaltmodul 90 dargestellt. Das Schaltmodul 90 ähnelt in seinem Aufbau dem Schaltmodul 50 der Figur 5. In den Figuren 5 und 9 sind gleiche und gleichartige Bauteile und Elemente mit gleichen Bezugszeichen versehen. Aus Gründen der Übersichtlichkeit wird im Einzelnen nur auf die Unterschiede zwischen dem Schaltmodul 90 und dem Schaltmodul 50 der Figur 5 näher eingegangen. Es ist anhand der Figur 9 erkennbar, dass das Schaltmodul 90 eine erste Energiespeicherschaltung EB1 umfasst, die insbesondere den zweiten Halbleiterschalter H2, den fünften Halbleiterschalter H5 und den ersten Energiespeicher E1 enthält. Derart aufgefasst ist die erste Energiespeicherschaltung EB1 dreipolig. Ein erster Pol 91 der ersten Energiespeicherschaltung EB1 mit einem fünften Potenzialpunkt P5 zwischen dem ersten Anschluss X1 des Schaltmoduls 90 und dem ersten Halbleiterschalter H1 im Brückenzweig BZ verbunden ist. Ein zweiter Pol 92 der Energiespeicherschaltung EB1 ist mit einem vierten Potenzialpunkt P4 zwischen den beiden Halbleiterschaltern H1 und H4 im Brückenzweig verbunden. Ein dritter Pol 93 der ersten Energiespeicherschaltung EB1 ist mit dem ersten Potenzialpunkt P1 verbunden. Die erste Energiespeicherschaltung EB1 bildet somit einen Grundblock, der modular durch weitere Blöcke gleichen Aufbaus erweitert werden kann. Auf gleiche Weise umfasst das Schaltmodul 90 eine zweite Energiespeicherschaltung EB2, die den dritten und den sechsten Halbleiterschalter H3 bzw. H6 sowie den zweiten Energiespeicher E2 enthält.

Parallel zur ersten Energiespeicherschaltung EB1 ist dementsprechend eine dritte, gleichartig aufgebaute Energiespeicherschaltung geschaltet, die weitere Halbleiterschalter H21 und H51 sowie einen zusätzlichen Energiespeicher E3 enthält. Des Weiteren ist parallel zur zweiten Energiespeicherschaltung EB2 eine vierte, gleichartig aufgebaute Energiespeicherschaltung geschaltet, die zusätzliche Halbleiterschalter H31 und H61 sowie einen vierten Energiespeicher E4 umfasst. Es ist aus der Figur 9 erkennbar, dass eine beliebige Anzahl gleichartiger Energiespeicherschaltungen unabhängig voneinander in einer Parallelschaltung prinzipiell in einem Schaltmodul dieser Art schaltbar ist.

## Patentansprüche

1. Schaltmodul (40) für einen modularen Mehrstufenumrichter (1) umfassend
einen sich zwischen einem ersten und einem zweiten äußeren Anschluss des Schaltmoduls erstreckenden Brückenzweig (BZ) mit wenigstens einem ersten, abschaltbaren Halbleiterschalter (H1) sowie
einen ersten Energiespeicherzweig (EZ1), der einen ersten Energiespeicher (E1) und wenigstens einen zweiten, abschaltbaren Halbleiterschalter (H2) umfasst, und der parallel zum ersten Halbleiterschalter (H1) geschaltet ist, einen zweiten Energiespeicherzweig (EZ2), der einen zweiten Energiespeicher (E2) sowie wenigstens einen dritten, abschaltbaren Halbleiterschalter (H3) umfasst, wobei der zweite Energiespeicherzweig (EZ2) parallel zum ersten Halbleiterschalter (H1) und zum ersten Energiespeicherzweig (EZ1) unter Ausbildung des Schaltmoduls (40) geschaltet ist, wobei die Halbleiterschalter (H1-3) mit den Energiespeichern (E1,2) des Schaltmoduls (40) derart verschaltet sind, dass an den Anschlüssen (X1,X2) des Schaltmoduls (40) eine an jedem der Energiespeicher (E1,E2) abfallende Energiespeicherspannung (UC1,UC2) oder eine Nullspannung erzeugbar ist,
wobei
der Brückenzweig (BZ) den ersten und einen vierten, abschaltbaren Halbleiterschalter (H1, H4) umfasst, der zwischen dem ersten Halbleiterschalter (H1) und dem zweiten äußeren Anschluss (X2) des Schaltmoduls (50) angeordnet ist, und
das Schaltmodul (50) ferner umfasst
- einen ersten Schaltzweig (SZ 1), der sich zwischen einem ersten Potenzialpunkt (P1) zwischen dem vierten Halbleiterschalter (H4) und dem zweiten Anschluss (X2) und einem zweiten Potenzialpunkt (P2) zwischen dem ersten Energiespeicher (E1) und dem zweiten Halbleiterschalter (H2) erstreckt, wobei im ersten Schaltzweig (SZ 1) ein fünfter Halbleiterschalter (H5) angeordnet ist, und
- einen zweiten Schaltzweig (SZ2), der sich zwischen dem ersten Potenzialpunkt (P1) und einem dritten Potenzialpunkt (P3) zwischen dem zweiten Energiespeicher (E2) und dem dritten Halbleiterschalter (H3) erstreckt, wobei im zweiten Schaltzweig (SZ2) ein sechster Halbleiterschalter (H6) angeordnet ist,
**dadurch gekennzeichnet, dass**
die Energiespeicherzweige (EZ1, EZ2) jeweils einen siebten bzw. einen achten Halbleiterschalter (H7, H8) in einer Reihenschaltung zum Energiespeicher (E1, E2) aufweisen.

2. Schaltmodul (60) nach Anspruch 1, wobei der fünfte Halbleiterschalter (H5) und der sechste Halbleiterschalter (H6) nicht ansteuerbare Halbleiterschalter sind.

3. Schaltmodul (50) nach Anspruch 2, wobei der fünfte und der sechste Halbleiterschalter (H5, H6) der Schaltzweige (SZ1,2) jeweils abschaltbare Halbleiterschalter sind, wobei die Halbleiterschalter (H1-6) und die Energiespeicher (E1,E2) derart miteinander verschaltet sind, dass an den Anschlüssen (X1,X2) des Schaltmoduls (50) zusätzlich eine negative Energiespeicherspannung (-UC1,-UC2) erzeugbar ist.

4. Schaltmodul (80) nach Anspruch 1, wobei das Schaltmodul (80) einen dritten Energiespeicherzweig (EZ3) und einen vierten Energiespeicherzweig (EZ4) umfasst, wobei der erste und der dritte Energiespeicherzweig (EZ3, EZ3) gleichartig aufgebaut sind, und der zweite und der vierte Energiespeicherzweig (EZ2,EZ4) gleichartig aufgebaut sind, wobei der dritte Energiespeicherzweig (EZ3) parallel zum ersten Energiespeicherzweig (EZ1) und der vierte Energiespeicherzweig (EZ4) parallel zum zweiten Energiespeicherzweig (EZ2) unter Ausbildung des Schaltmoduls (80) geschaltet sind.

5. Schaltmodul (90) nach einem der vorangehenden Ansprüche 1 bis 4, wobei
- der erste Energiespeicherzweig (EZ1) und der erste Schaltzweig (SZ 1) eine erste Energiespeicherschaltung (EB1) bilden und
- der zweite Energiespeicherzweig (EZ2) und der zweite Schaltzweig (SZ2) eine zweite Energiespeicherschaltung (EB2) bilden, wobei
das Schaltmodul (90) ferner eine dritte und eine vierte Energiespeicherschaltung umfasst, wobei die dritte Energiespeicherschaltung und die erste Energiespeicherschaltung (EB1) gleichartig aufgebaut sind, und wobei die vierte und die zweite Energiespeicherschaltung (EB2, EB4) gleichartig aufgebaut sind, und die dritte Energiespeicherschaltung parallel zur ersten Energiespeicherschaltung (EB1) und die vierte Energiespeicherschaltung parallel zur zweiten Energiespeicherschaltung (EB2) unter Ausbildung des Schaltmoduls (90) geschaltet sind.

6. Schaltmodul (40) nach einem der vorangehenden Ansprüche, wobei mindestens einem der abschaltbaren Halbleiterschalter (H1-3) eine Freilaufdiode (D) antiparallel geschaltet ist.

7. Schaltmodul (50) nach einem der vorangehenden Ansprüche, wobei die Halbleiterschalter der Energiespeicherzweige (H2, H3) und/oder der Schaltzweige höchstens 70 % der Stromtragfähigkeit der Halbleiterschalter (H1, H4) des Brückenzweiges (BZ) aufweisen.

8. Modularer Mehrstufenumrichter (1)
**dadurch gekennzeichnet, dass**
der modulare Mehrstufenumrichter (1) wenigstens ein Schaltmodul (40) nach einem der Ansprüche 1 bis 7 umfasst.

## Claims

1. Switching module (40) for a modular multi-level converter (1) comprising
a bridge branch (BZ) extending between a first and a second outer connection of the switching module and having at least a first turn-off semiconductor switch (H1) and
a first energy storage unit branch (EZ1) which comprises a first energy storage unit (E1) and at least a second turn-off semiconductor switch (H2) and which is connected in parallel with the first semiconductor switch (H1), a second energy storage unit branch (EZ2) which comprises a second energy storage unit (E2) and at least a third turn-off semiconductor switch (H3), wherein the second energy storage unit branch (EZ2) is connected in parallel with the first semiconductor switch (H1) and with the first energy storage unit branch (EZ1) so as to form the switching module (40), wherein the semiconductor switches (H1-3) are connected to the energy storage units (E1,2) of the switching module (40) in such a way that an energy storage unit voltage (UC1, UC2) dropping across each of the energy storage units (E1, E2) or a zero voltage can be produced at the connections (X1, X2) of the switching module (40),
wherein
the bridge branch (BZ) comprises the first and a fourth turn-off semiconductor switch (H1, H4), the latter being arranged between the first semiconductor switch (H1) and the second outer connection (X2) of the switching module (50), and
the switching module (50) further comprises
- a first switching branch (SZ1) which extends between a first potential point (P1) between the fourth semiconductor switch (H4) and the second connection (X2) and a second potential point (P2) between the first energy storage unit (E1) and the second semiconductor switch (H2), wherein a fifth semiconductor switch (H5) is arranged in the first switching branch (SZ1), and
- a second switching branch (SZ2) which extends between the first potential point (P1) and a third potential point (P3) between the second energy storage unit (E2) and the third semiconductor switch (H3), wherein a sixth semiconductor switch (H6) is arranged in the second switching branch (SZ2), **characterized in that**
the energy storage unit branches (EZ1, EZ2) respectively have a seventh and an eighth semiconductor switch (H7, H8) connected in series with the energy storage unit (E1, E2).

2. Switching module (60) according to Claim 1, wherein the fifth semiconductor switch (H5) and the sixth semiconductor switch (H6) are uncontrollable semiconductor switches.

3. Switching module (50) according to Claim 2, wherein the fifth and the sixth semiconductor switch (H5, H6) of the switching branches (SZ1,2) are each turn-off semiconductor switches, wherein the semiconductor switches (H1-6) and the energy storage units (E1, E2) are connected to one another in such a way that a negative energy storage unit voltage (-UC1, -UC2) can additionally be produced at the connections (X1, X2) of the switching module (50).

4. Switching module (80) according to Claim 1, wherein the switching module (80) comprises a third energy storage unit branch (EZ3) and a fourth energy storage unit branch (EZ4), wherein the first and the third energy storage unit branch (EZ3, EZ3) are of identical construction, and the second and the fourth energy storage unit branch (EZ2, EZ4) are of identical construction, wherein the third energy storage unit branch (EZ3) is connected in parallel with the first energy storage unit branch (EZ1) and the fourth energy storage unit branch (EZ4) is connected in parallel with the second energy storage unit branch (EZ2) so as to form the switching module (80) .

5. Switching module (90) according to one of preceding Claims 1 to 4, wherein
- the first energy storage unit branch (EZ1) and the first switching branch (SZ1) form a first energy storage unit circuit (EB1) and
- the second energy storage unit branch (EZ2) and the second switching branch (SZ2) form a second energy storage unit circuit (EB2), wherein
the switching module (90) further comprises a third and a fourth energy storage unit circuit, wherein the third energy storage unit circuit and the first energy storage unit circuit (EB1) are of identical construction, and wherein the fourth and the second energy storage unit circuit (EB2, EB4) are of identical construction, and the third energy storage unit circuit is connected in parallel with the first energy storage unit circuit (EB1) and the fourth energy storage unit circuit is connected in parallel with the second energy storage unit circuit (EB2) so as to form the switching module (90).

6. Switching module (40) according to one of the preceding claims, wherein a freewheeling diode (D) is connected in antiparallel at least with one of the turn-off semiconductor switches (H1-3).

7. Switching module (50) according to one of the preceding claims, wherein the semiconductor switches (H2, H3) of the energy storage unit branches and/or of the switching branches have at most 70% of the current-carrying capacity of the semiconductor switches (H1, H4) of the bridge branch (BZ).

8. Modular multi-level converter (1)
**characterized in that**
the modular multi-level converter (1) comprises at least one switching module (40) according to one of Claims 1 to 7.

## Revendications

1. Module (40) de coupure d'un convertisseur (1) modulaire à plusieurs étages comprenant
une branche (BZ) de pont, qui s'étend entre une première et une deuxième borne extérieure du module de coupure et qui a au moins un premier interrupteur (H1) à semiconducteur pouvant être bloqué, ainsi que
une première branche (EZ1) d'accumulateur d'énergie, qui comprend un premier accumulateur (E1) d'énergie et au moins un deuxième interrupteur (H2) à semiconducteur pouvant être bloqué, et qui est monté en parallèle avec le premier interrupteur (H1) à semiconducteur, une deuxième branche (EZ2) d'accumulateur d'énergie, qui comprend un deuxième accumulateur (E2) d'énergie, ainsi qu'au moins un troisième interrupteur (H3) à semiconducteur pouvant être bloqué, dans lequel la deuxième branche (EZ2) d'accumulateur d'énergie est montée en parallèle avec le premier interrupteur (H1) à semiconducteur et avec la première branche (EZ1) d'accumulateur d'énergie en constituant le module (40) de coupure, dans lequel les interrupteurs (H1-3) à semiconducteur sont connectés aux accumulateurs (E1, 2) d'énergie du module (40) de coupure, de manière à pouvoir produire aux bornes (X1, X2) de module (40) de coupure une tension (UC1, UC2) d'accumulateur d'énergie chutant à chacun des accumulateurs (E1, E2) d'énergie ou une tension zéro,
dans lequel
la branche (BZ) de pont comprend le premier et un quatrième interrupteur (H1, H4) à semiconducteur pouvant être bloqué, qui est monté entre le premier interrupteur (H1) à semiconducteur et la deuxième borne (X2) extérieure du module (50) de coupure, et
le module (50) de coupure comprend en outre
- une première branche (SZ 1) de coupure, qui s'étend entre un premier point (P1) de potentiel entre le quatrième interrupteur (H4) à semiconducteur et la deuxième borne (X2), et un deuxième point (P2) de potentiel entre le premier accumulateur (E1) d'énergie et le deuxième interrupteur (H2) à semiconducteur, dans lequel, dans la première branche (SZ 1) de coupure est monté un cinquième interrupteur (H5) à semiconducteur, et
- une deuxième branche (SZ2) de coupure, qui s'étend entre le premier point (P1) de potentiel et un troisième point (P3) de potentiel entre le deuxième accumulateur (E2) d'énergie et le troisième interrupteur (H3) à semiconducteur, dans lequel un sixième interrupteur (H6) à semiconducteur est monté dans la deuxième branche (SZ2) de coupure,
**caractérisé en ce que**
les branches (EZ1, EZ2) d'accumulateur d'énergie ont chacune un septième et respectivement un huitième interrupteurs (H7, H8) à semiconducteur dans un montage en série avec l'accumulateur (E1, E2) d'énergie.

2. Module (60) de coupure suivant la revendication 1, dans lequel le cinquième interrupteur (H5) à semiconducteur et le sixième interrupteur (H6) à semiconducteur sont des interrupteurs à semiconducteur qui ne peuvent pas être commandés.

3. Module (50) de coupure suivant la revendication 2, dans lequel le cinquième et le sixième interrupteur (H5, H6) à semiconducteur des branches (SZ1, 2) de coupure sont chacun des interrupteurs à semiconducteur pouvant être bloqués, dans lequel les interrupteurs (H1-6) à semiconducteur et les accumulateurs (E1, E2) d'énergie sont connectés entre eux, de manière à pouvoir produire aux bornes (X1, X2) du module (50) de coupure en outre une tension (-UC1, -UC2) négative d'accumulateur d'énergie.

4. Module (80) de coupure suivant la revendication 1, dans lequel le module (80) de coupure comprend une troisième branche (EZ3) d'accumulateur d'énergie et une quatrième branche (EZ4) d'accumulateur d'énergie, dans lequel la première et la troisième branches (EZ3, EZ3) d'accumulateur d'énergie sont constituées de la même façon, et la deuxième et la quatrième branches (EZ2,EZ4) d'accumulateur d'énergie sont constituées de la même façon, dans lequel la troisième branche (EZ3) d'accumulateur d'énergie est montée en parallèle avec la première branche (EZ1) d'accumulateur d'énergie et la quatrième branche (EZ4) d'accumulateur d'énergie est montée en parallèle avec la deuxième branche (EZ2) d'accumulateur d'énergie en constituant le module (80) de coupure.

5. Module (90) de coupure suivant l'une des revendications 1 à 4 précédentes, dans lequel
- la première branche (EZ1) d'accumulateur d'énergie et la première branche (SZ 1) de coupure forment un premier circuit (EB1) d'accumulateur d'énergie et
- la deuxième branche (EZ2) d'accumulateur d'énergie et la deuxième branche (SZ2) de coupure forment un deuxième circuit (EB2) d'accumulateur d'énergie, dans lequel
le module (90) de coupure comprend en outre un troisième et un quatrième circuits d'accumulateur d'énergie, dans lequel le troisième circuit d'accumulateur d'énergie et le premier circuit (EB1) d'accumulateur d'énergie sont constitués de la même façon, et dans lequel le quatrième et le deuxième circuits (EB2, EB4) d'accumulateur d'énergie sont constitués de la même façon, et le troisième circuit d'accumulateur d'énergie est monté en parallèle avec le premier circuit (EB1) d'accumulateur d'énergie, et le quatrième circuit d'accumulateur d'énergie est monté en parallèle avec le deuxième circuit (EB2) d'accumulateur d'énergie en constituant le module (90) de coupure.

6. Module (40) de coupure suivant l'une des revendications précédentes, dans lequel une diode (D) de roue libre est montée tête bêche avec au moins l'un des interrupteurs (H1-3) à semiconducteur pouvant être bloqué.

7. Module (50) de coupure suivant l'une des revendications précédentes, dans lequel les interrupteurs à semiconducteur des branches (H2, H3) d'accumulateur d'énergie et/ou des branches de coupure ont au plus 70% de la capacité à porter le courant des interrupteurs (H1, H4) à semiconducteur de la branche (BZ) de pont.

8. Convertisseur (1) modulaire à plusieurs étages,
**caractérisé en ce que** le convertisseur (1) modulaire à plusieurs étages comprend au moins un module (40) de coupure suivant l'une des revendications 1 à 7.
